# EUROPÄISCHE PATENTSCHRIFT

(11) **EP 2 041 430 B1**
(45) Veröffentlichungstag und Bekanntmachung des Hinweises auf die Patenterteilung: **05.10.2011**
(21) Anmeldenummer: 06761826.4
(22) Anmeldetag: 17.07.2006
(51) Int. Cl.: F03D 7/00, F03D 7/02

(54) **BREMSVORRICHTUNG**
BRAKE DEVICE
MÉCANISME DE FREIN

(43) Veröffentlichungstag der Anmeldung: 01.04.2009
(73) Patentinhaber: S.B. Patent Holdings ApS, 5882 Vejstrup (DK)
(72) Erfinder: SKJAERBAEK, Erik, 8217 Mamer. (LU)
(74) Vertreter: Griepenstroh, Jörg
(86) Internationale Anmeldenummer: PCT/DE2006/001249
(87) Internationale Veröffentlichungsnummer: WO 2008/009246

(56) Entgegenhaltungen:
- DE-A1-102005 038 243
- DE-U1- 20 203 794
- US-A- 2 199 234

## Beschreibung

Die Erfindung betrifft eine Bremsvorrichtung zum Abbremsen eines sich bewegenden Körpers gemäß den Merkmalen im Oberbegriff des Patentanspruchs 1.

Die einschlägigen Sicherheitsvorschriften für Windkraftanlagen schreiben vor, dass zwei vollständig voneinander unabhängige und redundante Bremssysteme erforderlich sind. Bei älteren Windkraftanlagen werden diese redundanten Bremssysteme in Form von unabhängig voneinander betreibbaren Bremsen verwirklicht, wobei meistens ein Fremdsystem aerodynamisch und ein Bremssystem mechanisch ausgeführt wurde. Bei modernen Windkraftanlagen können beide Bremssysteme als aerodynamische Bremsen mit mechanischen Systemen zum Verdrehen der Rotorblätter um deren etwa senkrecht zur Rotorachse verlaufenden Längsachsen verwirklicht werden. Mechanische Bremsen sind bei derartigen Anlagen mit Einzelblattverstellung bzw. so genannten Pitch-Anlagen nicht mehr als elementarer Bestandteil des Sicherheitskonzepts erforderlich. Allerdings werden auch bei diesen modernen Windkraftanlagen mechanische Bremsen eingesetzt, um den Rotor nach der aerodynamischen Abbremsung stillsetzen zu können.

Erst bei einer vollkommenen Stillsetzung des Rotors sind Servicearbeiten im Bereich des Rotors bzw. der Rotornarbe möglich. Die zu diesem Zweck eingesetzten mechanischen Rotorbremsen werden auch als Service- und Unterstützungsbremsen bezeichnet. Üblicherweise werden zu diesem Zweck bei älteren Anlagen auch zum Abbremsen der Rotordrehung hydraulische Bremsen eingesetzt. Mit solchen hydraulischen Bremsen können bei geringen Baugrößen besonders hohe Klemm- und Bremskräfte erzeugt werden. Ferner wird mit hydraulischen Bremsen ein Ansprechverhalten erreicht, mit dem die volle Bremskraft innerhalb sehr kurzer Zeit zur Verfügung gestellt wird. Es hat sich allerdings gezeigt, dass es beim Einsatz dieser herkömmlichen hydraulischen und elektro-mechanischen Bremsen als Service- und Unterstützungsbremse zusätzlich zur durch Blattverstellung erreichten aerodynamischen Bremse zu Beschädigungen der Bremsen selbst und der stillgesetzten Bauteile kommen kann.

In der nicht vorveröffentlichten deutschen Patentanmeldung DE 10 2005 038 243.6 wird beschrieben, dass die Probleme in erster Linie darauf zurückzuführen sind, dass die Betätigung dieser Bremsen als Service- und Unterstützungsbremsen bei bereits aerodynamisch weitgehend abgebremstem Rotor zur Anregung von Torsionsschwingungen im Bereich des Rotors bzw. der Rotornarbe führen kann. Diese Torsionsschwingungen führen zu einer Materialermüdung und entsprechenden Beschädigungen der Windkraftanlage. Die Anregung von Torsionsschwingungen beim Einsatz herkömmlicher hydraulischer Bremsen als Service- und Unterstützungsbremsen ist darauf zurückzuführen, dass bei diesen Bremsen die vollständige Bremskraft, ansprechend auf eine Betätigung, sehr schnell verfügbar ist, was zu einer abrupten Abbremsung der bereits aerodynamisch gebremsten Rotorbewegung führt. Dieses Problem tritt nicht auf, wenn die hydraulische Bremse zur Abbremsung des Rotors aus seiner Betriebsdrehzahl eingesetzt wird, weil in diesem Falle die Trägheit des Rotors mit seiner üblicherweise besonders großen Masse eine abrupte Abbremsung wirkungsvoll verhindert.

Es wird in der DE 10 2005 038 243.6 die Zwischenschaltung einer Umwandlungseinrichtung vorgeschlagen, durch welche die Bremswirkung verzögert wird. Die Umwandlungseinrichtung basiert auf dem Prinzip eines Spindelgetriebes mit starker Untersetzung. Auf diese Weise kann eine abrupte Stillsetzung der Rotordrehung auch bei kleinen Rotordrehzahlen wirkungsvoll verhindert werden. Darüber hinaus wird bei dieser Lösung als vorteilhaft angesehen, dass aufwändige hydraulische Systeme für den Einsatz dieser Bremsanlage nicht erforderlich sind. Mit einem hydraulischen Bremskaliber können größte Klemmkräfte auf einen relativ kleinen Bauraum aufgebracht werden. Hier liegt der größte Vorteil bei der Hydraulik. Andererseits benötigt eine hydraulische Bremse auch immer einen hydraulischen Druck, der durch ein weiteres System aufzubringen ist. Hier werden teilweise hydraulische Aggregate verwendet oder auch mechanische Wirkprinzipien benutzt. Bei intelligenten Bremssystemen (ABS, Traction Control) werden zusätzlich Sensoren und elektrische Signale benötigt um Regelkreise aufzubauen. Bei der Verwendung von Hydraulikaggregaten wird zudem elektrische Energie benötigt um einen hydraulischen Druck zu erzeugen. In vielen Fällen ist also elektrische Energie oder mindestens elektrische Signalübertragung zusätzlich zu einem Hydrauliksystem vorhanden.

Elektro-mechanische Bremskaliber weisen als Service- und Unterstützungsbremsen für Windkraftanlagen zwar recht hohe Bremskräfte auf, die zudem durch Zwischenschaltung eines Getriebes erhöht werden können, wie beispielweise aus der DE 202 03 794 U1 bekannt, das elektro-mechanische Bremskaliber an sich weist jedoch nicht die Kompaktheit auf, die mit einem hydraulischen Bremskaliber erreicht werden kann. Bei dieser Betrachtung bleibt selbstverständlich unberücksichtigt, dass zur Erzeugung eines hydraulischen Drucks weitere Systemkomponenten erforderlich sind. Die bekannten pneumatischen Bremskaliber erreichen ebenfalls nicht die gewünschte Kompaktheit, da die Kräfte eines pneumatischen Krafterzeugers immer kleiner sind als die eines hydraulischen Krafterzeugers gleicher Baugröße.

Der Erfindung liegt daher die Aufgabe zu Grunde, ein elektromechanisches Bremskaliber aufzuzeigen, das in der Lage ist, hohe Bremskräfte bei sehr kompakter Bauweise zu erzeugen.

Diese Aufgabe ist bei einer Bremsvorrichtung mit Merkmalen des Patentanspruchs 1 gelöst.

Vorteilhafte Weiterbildungen des Erfindungsgedankens sind Gegenstand der Unteransprüche.

Bei der erfindungsgemäßen Bremsvorrichtung zum Abbremsen eines sich bewegenden Bremskörpers, insbesondere einer Bremsscheibe, wird ein Bremselement auf den Bremskörper gepresst. Eine Umwandlungseinrichtung, beispielsweise ein Spindelantrieb, dient zum Umwandeln einer Drehbewegung einer Bremsantriebswelle in eine Translationsbewegung des Bremselements, das auf den Bremskörper gepresst werden soll. Bei der erfindungsgemäßen Bremsvorrichtung ist vorgesehen, dass zwischen der Bremsantriebswelle und der Umwandlungsrichtung ein Drehschlagwerk geschaltet ist. Ein Drehschlagwerk, das nach dem Wirkprinzip eines Schlagschraubers arbeitet, erzeugt Schlagenergie in tangentiale Richtung, so dass sich hohe Anziehmomente erreichen lassen, was bei einer Bremse mit hohen Bremskräften gleichzusetzen ist.

Der Vorteil der erfindungsgemäßen Bremsvorrichtung ist, dass für das Drehschlagwerk nur minimaler Bauraum erforderlich ist, so dass sich sehr hohe Klemmkräfte bei diesen elektro-mechanischen Bremskalibern ergeben. Derartige Bremskaliber können sowohl bei translatorisch als auch bei sich drehenden Bremskörpern, d.h. bei Bremsscheiben, zum Einsatz kommen. Das Wirkprinzip der Bremsvorrichtung ist nicht auf einen konkreten Anwendungsfall beschränkt. Besonders vorteilhaft kann die beanspruchte Bremsvorrichtung jedoch in Systemen zum Einsatz kommen, bei denen hohe Bremskräfte bei gleichzeitig möglichst geringem Bauvolumen realisiert werden sollen, wie beispielsweise bei Service- und Unterstützungsbremsen von Windkraftanlagen. Anwendungsfälle bei denen ähnliche Aufgabenstellungen zugrunde liegen, d. h. bei denen hohe Bremskräfte bei geringem Bauvolumen erforderlich sind, finden sich bei vielen industriellen Anwendungen, aber auch in der Fahrzeugtechnik, insbesondere der Bahntechnologie.

Das Drehschlagwerk setzt sich in bevorzugter Ausgestaltung aus einem Schlaganker und einem Mitnehmerrad zusammen, wobei der Schlaganker und das Mitnehmerrad über eine Federkraft gegeneinander gepresst werden, so dass der Schlaganker und das Mitnehmerrad über axial vorstehende Mitnehmer im Eingriff stehen und ein Drehmoment der Bremsantriebswelle auf die Umwandlungseinrichtung übertragen werden kann. Unter Überwindung der Federkraft und Trennung des in Eingriff stehenden Schlagankers von dem Mitnehmerrad durch Verlagerung in Axialrichtung der Bremsantriebswelle, erfolgt ein Übersetzen bzw. Übergreifen des Schlagankers, so dass beim Weiterdrehen ein Schlagimpuls in Tangentialrichtung auf das Mitnehmerrad ausgeübt wird. Bei dieser Konfiguration ist das Mitnehmerrad vorzugsweise axial feststehend angeordnet, während der Schlaganker in Axialrichtung verlagerbar ist und von der Federkraft beaufschlagt wird.

In der praktischen Ausgestaltung kann es sich bei dem Drehschlagwerk um ein V-Nuten-Schlagwerk handeln, bei welchem beispielsweise in dem Mitnehmerrad V-förmige Nuten ausgebildet sind, in welche in Axialrichtung vorstehende, als Nocken ausgebildete Mitnehmer des Schlagankers eingreifen. Diese Konfiguration hat den Vorteil, dass eine sehr geringe Baulänge in Axialrichtung des Drehschlagwerks erforderlich ist.

Grundsätzlich ist es auch denkbar, dass das Drehschlagwerk ein Nockenschlagwerk ist, bei welchem sowohl an dem Mitnehmerrad als auch an dem Schlaganker in Axialrichtung vorstehende Mitnehmer angeordnet sind, die zur Drehmomentübertragung gegenseitig zur Anlage gelangen.

Wichtig für die Funktionsweise des Drehschlagwerks ist, dass bei Überschreitung eines eingestellten Solldrehmoments ein Übersetzen des Schlagankers erfolgt. Dies wird bei der erfindungsgemäßen Bremsvorrichtung dadurch realisiert, dass der Schlaganker über einen Mitnehmerzapfen mit einer gewendelten Steuernut der Bremsantriebswelle im Eingriff steht. Wenn die Bremsvorrichtung aktiviert werden soll, d.h. wenn das Bremselement von einer Freilaufstellung in eine Bremsstellung verlagert werden soll, dann wird zunächst ein Drehmoment über die Bremsantriebswelle aufgebracht, das über den Schlaganker, die Mitnehmer und das Mitnehmerrad in die Umwandlungseinrichtung eingeleitet wird, die das Bremselement in Richtung auf den Bremskörper bewegt. Wenn das Bremselement an dem Bremskörper anliegt, bleibt das Mitnehmerrad stehen. Das hat zur Folge, dass sich der Schlaganker nicht mehr weit dreht, während die Drehung der Bremsantriebswelle fortgesetzt wird. Die Steuernut ist nun derart konfiguriert, dass der Mitnehmerzapfen des Schlagankers in der gewendelten Steuernut wie in einer Kulisse geführt wird und in Axialrichtung verlagert wird, so dass sich der Schlaganker in Axialrichtung von dem Mitnehmerrad löst. Wenn der Schlaganker übersetzt, d.h. nicht mehr mit dem Mitnehmerrad im Eingriff steht, wird er durch die Drehbewegung der Bremsantriebswelle stark beschleunigt und gleichzeitig wieder über die Federkraft in Richtung auf das Mitnehmerrad gepresst, so dass es unmittelbar wieder zum Eingriff zwischen dem Schlaganker und dem Mitnehmerrad kommt. Der schlagartige Impuls führt dazu, dass sich das Mitnehmerrad geringfügig weiterdreht, so dass sich die Bremskraft auf den Bremskörper weiter erhöht. Dieser Vorgang wiederholt sich mehrfach bis sichergestellt ist, dass keine höhere Bremskraft auf den Bremskörper aufgebracht werden kann.

Wesentlichen Einfluss auf das Bremsmoment hat daher nicht nur die Federkraft, die den Schlaganker gegen das Mitnehmerrad presst, sondern auch die Masse des Schlagankers. Es wird als vorteilhaft angesehen, wenn die Bremsantriebswelle von einer die Federkraft auf den Schlaganker ausübenden Schraubenfeder umgeben ist, da auf diese Art und Weise auf sehr geringem Bauraum hohe Federkräfte verwirklicht werden können.

Das Mitnehmerrad selbst ist zweckmäßigerweise unmittelbar mit der Umwandlungseinrichtung gekoppelt. Die Verbindung ist insbesondere einstückig ausgebildet. Besonders bevorzugt ist das Mitnehmerrad einstückig mit einer Gewindespindel der Umwandlungseinrichtung ausgebildet. Diese Gewindespindel greift in einen in Axialrichtung verlagerbaren Gewindetopf, der in einem Gehäuse der Bremsvorrichtung geführt ist. Der Gewindetopf ist wiederum mit dem Bremselement verbunden und bewirkt durch axiale Verlagerung die eigentliche Bremsung. Es wird als vorteilhaft angesehen, wenn das Bremselement durch mindestens eine vollständige Umdrehung, vorzugsweise mehrere Umdrehungen, der Gewindespindel von einer Freilaufstellung in eine Bremsstellung verstellbar ist. Die Steigung der Gewindespindel kann so gewählt sein, dass die Umwandlungseinrichtung selbsthemmend ist. In diesem Fall kann die mit der Bremsantriebswelle gekoppelte Antriebseinheit ausgeschaltet werden, ohne dass zu befürchten ist, dass die Bremskraft nachlässt.

Bei der erfindungsgemäßen Bremsvorrichtung wird eine wesentlich kompaktere Bauform erreicht, als dies bei einem direkt gekoppelten Spindelantrieb möglich wäre. Darüber hinaus ermöglicht die Selbsthemmung eine Feststellung der Bremsvorrichtung, die bei hydraulisch und pneumatisch betätigten Kolben nicht ohne Weiteres, d.h. nicht ohne zusätzliche Ventilmittel realisierbar ist. Wichtig in diesem Zusammenhang ist, dass ein einmal aufgebrachtes Bremsmoment auch dann erhalten bleibt, wenn die Energie zum Betrieb der Bremsantriebswelle nicht mehr zur Verfügung steht.

Die Antriebsenergie zum Betrieb der Bremsantriebswelle kann elektrisch, pneumatisch, hydraulisch oder über einen Motor erfolgen.

Die Erfindung wird nachfolgend anhand eines in schematischen Zeichnungen dargestellten Ausführungsbeispiels näher erläutert. Es zeigt:
- Figur 1: eine Schnittdarstellung durch die erfindungsgemäße Bremsvorrichtung und
- Figur 2: eine perspektivische Darstellung des Drehschlagwerks der Figur 1.

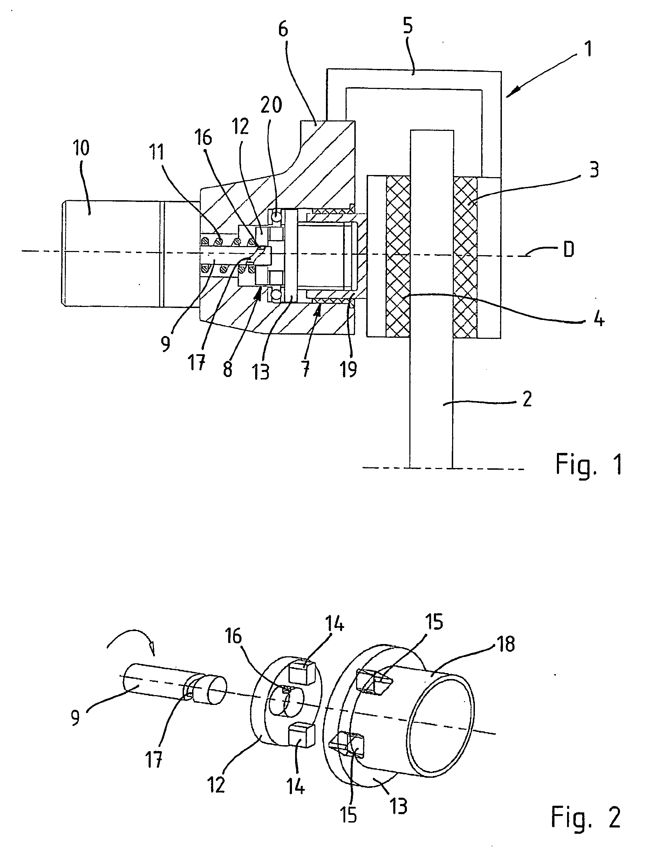

Figur 1 zeigt eine Schnittdarstellung durch eine Bremsvorrichtung 1 zum Abbremsen eines Bremskörpers 2, der in diesem Ausführungsbeispiel durch eine rotierende Bremsscheibe gebildet ist. Auf die Bremsscheibe werden sich gegenüberliegende Bremselemente 3 und 4 gepresst, wobei das in der Bildebene rechte Bremselement 3 feststehend angeordnet ist. Das in der Bildebene linke Bremselement 4 ist in Axialrichtung der Bremsvorrichtung 1 verlagerbar. Die Bremselemente 3 und 4 sind insgesamt an einem Bremssattel 5 gehalten bzw. gelagert, welcher den Bremskörper 2 übergreift.

Die Bremsvorrichtung 1 umfasst ein Gehäuse 6, das mit dem Bremssattel 5 verbunden ist. In dem Gehäuse 6 ist zum einen eine Umwandlungseinrichtung 7 und zum anderen ein Drehschlagwerk 8 angeordnet. Das Drehschlagwerk 8 wird über eine Bremsantriebswelle 9 angetrieben, welche wiederum von einem Motor 10 angetrieben wird, der mit dem Gehäuse 6 verbunden ist. Die Drehachse D der Bremsantriebswelle 9 bildet die Längsachse der Bremsvorrichtung 1.

Die Bremsantriebswelle 9 ist von einer Schraubenfeder 11 umgeben, welche sich einerseits an der dem Gehäuse 6 zugewandten Stirnseite des Motors 10 abstützt und andererseits einen Schlaganker 12 des Drehschlagwerks 8 gegen ein Mitnehmerrad 13 des Drehschlagwerks 8 drückt.

Die Bremsantriebswelle 9, der Schlaganker 12 und das Mitnehmerrad 13 sind auch in Figur 2 dargestellt. Es ist zu erkennen, dass der Schlaganker 12 in Axialrichtung vorstehende Mitnehmer 14 in Form von diametral angeordneten Nocken aufweist, welche mit Mitnehmern 15 an der Stirnseite des Mitnehmerrads 13 in Eingriff gelangen, wenn der Schlaganker 12 über die Schraubenfeder 11 gegen das Mitnehmerrad 13 gedrängt wird.

Ein weiteres wichtiges Bauteil ist ein Mitnehmerzapfen16, der radial nach innen an dem Schlaganker 12 vorsteht und in der Einbaulage mit einer gewendelten Steuernut 17 in Eingriff steht.

In Figur 1 befinden sich die Mitnehmer 14 und 15 in gegenseitigem Eingriff, wobei die Schraubenfeder 11 den Schlaganker 12 in Richtung zum Mitnehmerrad drängt. Durch die Konfiguration der Steuernut 17 befindet sich der Schlaganker 12 gewissermaßen in seiner Endposition und ist in der Bildebene Figur 1 so weit nach rechts wie möglich verlagert. Wenn der Motor 10 die Bremsantriebswelle 9 in Drehbewegung versetzt, wird zunächst der Schlaganker 12 synchron zum Mitnehmerrad 13 bewegt, bis dieses bei Anlage des Bremselementes 4 an dem Bremskörper 2 zum Stillstand gelangt. In diesem Moment führt die weitere Drehung der Bremsantriebswelle 9 zum Ausrücken der Mitnehmer 14 des Schlagankers, indem der Mitnehmerzapfen 16 in der Steuernut 17 nach hinten, d.h. in der Bildebene nach links entgegen der Federkraft der Schraubenfeder 11, verlagert wird. Das bewirkt, dass der Eingriff zwischen den Mitnehmern 14 und 15 aufgehoben wird und die Mitnehmer 14 des Schlagankers 12 übersetzen, um 180° weitergedreht werden und gleichzeitig über die Federkraft der Schraubenfeder 11 wieder in Richtung auf das Mitnehmerrad 13 gedrückt werden. Die Mitnehmer 14 des Schlagankers treffen schlagartig auf die korrespondierenden Mitnehmer 15 des Mitnehmerrads 13, so dass dieses geringfügig weitergedreht wird. Dieser Vorgang wiederholt sich mehrfach, bis es zum Stillstand des Mitnehmerrads 13 kommt.

Das Mitnehmerrad 13 ist einstückig mit einer Gewindespindel 18 ausgebildet, die in diesem Ausführungsbeispiel als Hohlspindel konfiguriert ist. Die Gewindespindel 18 besitzt ein Außengewinde und steht mit einem Gewindetopf 19 in Eingriff, der die Gewindespindel 18 umgibt. Der Gewindetopf 19 ist in dem Gehäuse 6 geführt und gegen axiales Verdrehen gesichert, so dass der Gewindetopf 19 ausschließlich eine durch Drehung der Gewindespindel 18 eingeleitete Axialbewegung vollzieht. Diese Axialbewegung wird ausgenutzt um das Bremselement 4 von einer Freilaufstellung in die in Figur 1 dargestellte Bremsstellung zu verlagern. Dabei wird eine Bremskraft aufgebracht, die über ein Axiallager 20 aufgefangen wird, das zwischen einer Anlageschulter des Gehäuses 6 und dem Mitnehmerrad 13 angeordnet ist. Das Axiallager 20 ist in diesem Ausführungsbeispiel außerhalb des von den Mitnehmerzapfen 14 und 15 beanspruchten inneren Bereichs platziert und umgibt den Bereich der Mitnehmerzapfen 14 und 15 gewissermaßen ringförmig.

Die Mitnehmer 14 und 15 sind so konfiguriert, dass die Bremsvorrichtung 1 auch bei Reversierung der Drehrichtung der Bremsantriebswelle 9 funktioniert, so dass das Bremselement 4 schon bei wenigen Drehungen der Gewindespindel 18 von dem Bremskörper 2 abgehoben werden kann.

### Bezugszeichen:

- 1 -: Bremsvorrichtung
- 2 -: Bremskörper
- 3 -: Bremselement
- 4 -: Bremselement
- 5 -: Bremssattel
- 6 -: Gehäuse
- 7 -: Umwandlungseinrichtung
- 8 -: Drehschlagwerk
- 9 -: Bremsantriebswelle
- 10 -: Motor
- 11 -: Schraubenfeder
- 12 -: Schlaganker
- 13 -: Mitnehmerrad
- 14 -: Mitnehmer
- 15 -: Mitnehmer
- 16 -: Mitnehmerzapfen
- 17 -: Steuernut
- 18 -: Gewindespindel
- 19 -: Gewindetopf
- 20 -: Axiallager

- D -: Drehachse

## Patentansprüche

1. Bremsvorrichtung zum Abbremsen eines sich bewegenden Bremskörpers durch Anpressen eines Bremselements (4) auf den Bremskörper (2), wobei eine Umwandlungseinrichtung (7) zum Umwandeln einer Drehbewegung einer Bremsantriebswelle (9) in eine Translationsbewegung des Bremselements (4) in Richtung auf den Bremskörper (2) vorgesehen ist, **dadurch gekennzeichnet, dass** zwischen die Bremsantriebswelle (9) und die Umwandlungseinrichtung (7) ein Drehschlagwerk (8) geschaltet ist.

2. Bremsvorrichtung nach Anspruch 1, **dadurch gekennzeichnet, dass** das Drehschlagwerk (8) einen Schlaganker (12) und ein Mitnehmerrad (13) aufweist, wobei der Schlaganker (8) und das Mitnehmerrad (13) über eine Federkraft gegeneinander gepresst sind, so dass der Schlaganker (8) und das Mitnehmerrad (13) über axial vorstehende Mitnehmer (14, 15) ein Drehmoment der Bremsantriebswelle (9) auf die Umwandlungseinrichtung (7) übertragend in Eingriff stehen, wobei unter Überwindung der Federkraft und Trennung des in Eingriff stehenden Schlagankers (12) von dem Mitnehmerrad (13) durch Verlagerung in Axialrichtung der Bremsantriebswelle (9) ein Übersetzen des Schlagankers (12) erfolgt, so dass beim Weiterdrehen ein Drehschlagimpuls auf das Mitnehmerrad (13) ausgeübt wird.

3. Bremsvorrichtung nach Anspruch 1 oder 2, **dadurch gekennzeichnet, dass** das Drehschlagwerk ein V-Nuten-Schlagwerk ist.

4. Bremsvorrichtung nach Anspruch 1 oder 2, **dadurch gekennzeichnet, dass** das Drehschlagwerk ein Nockenschlagwerk ist.

5. Bremsvorrichtung nach einem der Ansprüche 1 bis 4, **dadurch gekennzeichnet, dass** der Schlaganker (12) über einen Mitnehmerzapfen (16) mit einer gewendelten Steuernut (17) der Bremsantriebswelle (9) in Eingriff steht.

6. Bremsvorrichtung nach einem der Ansprüche 1 bis 5, **dadurch gekennzeichnet, dass** die Bremsantriebswelle (9) von einer die Federkraft auf den Schlaganker (12) ausübenden Schraubenfeder (11) umgeben ist.

7. Bremsvorrichtung nach einem der Ansprüche 1 bis 6, **dadurch gekennzeichnet, dass** das Mitnehmerrad (13) mit einer Gewindespindel (18) der Umwandlungseinrichtung (7) verbunden ist.

8. Bremsvorrichtung nach einem der Ansprüche 1 bis 7, **dadurch gekennzeichnet, dass** das Mitnehmerrad (13) einstückig mit einer Gewindespindel (18) der Umwandlungseinrichtung (7) ausgebildet ist.

9. Bremsvorrichtung nach einem der Ansprüche 7 oder 8, **dadurch gekennzeichnet, dass** die Gewindespindel (18) mit einem in einem Gehäuse (6) geführten und axial verlagerbaren Gewindetopf (19) in Eingriff steht, der mit dem Bremselement (4) verbunden ist.

10. Bremsvorrichtung nach einem der Ansprüche 1 bis 9, **dadurch gekennzeichnet, dass** die Steigung der Gewindespindel (18) selbsthemmend ist.

## Claims

1. Brake device for braking a moving brake body by means of pressing a brake element (4) onto the brake body (2), wherein a conversion device (7) is provided for converting a rotational movement of a brake drive shaft (9) into a translational movement of the brake element (4) in the direction of the brake body (2), **characterised in that** a rotary percussion mechanism (8) is connected between the brake drive shaft (9) and the conversion device (7).

2. Brake device according to claim 1, **characterised in that** the rotary percussion mechanism (8) has a percussion dowel (12) and a driver disk (13), wherein the percussion dowel (8) and the driver disk (13) are pressed against one another by means of a spring force, so that the percussion dowel (8) and the driver disk (13) are meshed via axially protruding drivers (14, 15) so as to transmit a torque of the brake drive shaft (9) to the conversion device (7) wherein, overcoming the spring force and separation of the meshed percussion dowel (12) from the driver disk (13) by shifting in the axial direction of the brake drive shaft (9), the percussion dowel (12) is transmitted so that, during further rotation, a percussion impulse acts upon the driver disk (13).

3. Brake device according to claim 1 or 2, **characterised in that** the rotary percussion mechanism is a V-groove percussion mechanism.

4. Brake device according to claim 1 or 2, **characterised in that** the rotary percussion mechanism is a cam percussion mechanism.

5. Brake device according to one of the claims 1 to 4, **characterised in that** the percussion dowel (12) meshes, via a driver pin (16), with a spiralled control groove (17) of the brake drive shaft (9).

6. Brake device according to one of claims 1 to 5, **characterised in that** the brake drive shaft (9) is surrounded by a coil spring (11) applying the spring force to the percussion dowel (12).

7. Brake device according to one of the claims 1 to 6, **characterised in that** the driver disk (13) is connected with a threaded spindle (18) of the conversion device (7).

8. Brake device according to one of claims 1 to 7, **characterised in that** the driver disk (13) is formed integrally with a threaded spindle (18) of the conversion device (7).

9. Brake device according to one of claims 7 or 8, **characterised in that** the threaded spindle (18) meshes with a threaded pot (19) which is guided in a housing (6) and can be axially shifted, said threaded pot being connected with the brake element (4).

10. Brake device according to one of the claims 1 to 9, **characterised in that** the pitch of the threaded spindle (18) is self-locking.

## Revendications

1. Dispositif de frein pour freiner un corps de frein en mouvement par pressage d'un élément de frein (4) sur le corps de frein (2), dans lequel il est prévu un système de conversion (7) pour convertir un mouvement de rotation d'un arbre d'entraînement de frein (9) en un mouvement de translation de l'élément de frein (4) en direction du corps de frein (2), **caractérisé en ce qu'**un mécanisme à choc rotatif (8) est monté entre l'arbre d'entraînement de frein (9) et le système de conversion (7).

2. Dispositif de frein selon la revendication 1, **caractérisé en ce que** le mécanisme à choc rotatif (8) comprend une armature à choc (12) et une roue d'entraînement (13), ladite armature à choc (12) et ladite roue d'entraînement (13) étant pressées l'une contre l'autre via une force élastique de telle façon que l'armature à choc (12) et la roue d'entraînement (13) sont en engagement via des ergots d'entraînement (14, 15) en dépassement axial, de manière à transmettre un couple de rotation de l'arbre d'entraînement de frein (9) vers le système de conversion (7), et en surmontant la force élastique avec séparation de l'armature à choc (12) qui se trouve en engagement, vis-à-vis de la roue d'entraînement (13) par déplacement de l'arbre d'entraînement de frein (9) en direction axiale, il se produit un transfert de l'armature à choc (12) de telle façon qu'en poursuivant la rotation une impulsion par choc rotatif est exercée sur la roue d'entraînement (13).

3. Dispositif de frein selon la revendication 1 ou 2, **caractérisé en ce que** le mécanisme à choc rotatif est un mécanisme à choc à gorge en V.

4. Dispositif de frein selon la revendication 1 ou 2, **caractérisé en ce que** le mécanisme à choc rotatif est un mécanisme à choc avec came.

5. Dispositif de frein selon l'une des revendications 1 à 4, **caractérisé en ce que** l'armature à choc (12) est en engagement, via un tenon d'entraînement (16), avec une gorge de commande en hélice (17) de l'arbre d'entraînement de frein (9).

6. Dispositif de frein selon l'une des revendications 1 à 5, **caractérisé en ce que** l'arbre d'entraînement de frein (9) est entouré par un ressort hélicoïdal (11) qui exerce la force élastique sur l'armature à choc (12).

7. Dispositif de frein selon l'une des revendications 1 à 6, **caractérisé en ce que** la roue d'entraînement (13) est reliée à une broche filetée (18) du système de conversion (7).

8. Dispositif de frein selon l'une des revendications 1 à 7, **caractérisé en ce que** la roue d'entraînement (13) est réalisée d'une seule pièce avec une broche filetée (18) du système de conversion (7).

9. Dispositif de frein selon l'une des revendications 7 ou 8, **caractérisé en ce que** la broche filetée (18) est en engagement avec un godet à pas de vis (19), guidé dans un boîtier (6) et axialement déplaçable, qui est relié à l'élément de frein (4).

10. Dispositif de frein selon l'une des revendications 1 à 9, **caractérisé en ce que** le pas de la broche filetée (18) est autobloquant.
